# EUROPEAN PATENT SPECIFICATION

(11) **EP 1 472 490 B1**
(45) Date of publication and mention of the grant of the patent: **01.10.2008**
(21) Application number: 02791930.7
(22) Date of filing: 20.12.2002
(51) Int. Cl.: F21V 8/00, G02B 6/00

(54) **DISPLAY DEVICE**
ANZEIGEVORRICHTUNG
DISPOSITIF D'AFFICHAGE

(30) Priority: 25.01.2002 EP 02075313
(43) Date of publication of application: 03.11.2004
(73) Proprietor: TPO Hong Kong Holding Limited, Shatin, Hong Kong (CN)
(72) Inventor: VAN DER WEL, Pieter, J., C., NL-5656 AA Eindhoven (NL)
(74) Representative: Hutter, Jacobus Johannes
(86) International application number: PCT/IB2002/005670
(87) International publication number: WO 2003/062912

(56) References cited:
- EP-A- 1 170 623
- PATENT ABSTRACTS OF JAPAN vol. 2000, no. 15, 6 April 2001 (2001-04-06) & JP 2000 347041 A (FUJITSU KASEI KK), 15 December 2000 (2000-12-15)
- PATENT ABSTRACTS OF JAPAN vol. 1997, no. 02, 28 February 1997 (1997-02-28) & JP 08 271887 A (SUMITOMO BAKELITE CO LTD), 18 October 1996 (1996-10-18)

## Description

The invention relates to a display device comprising an image display panel having a first substrate which is provided with electrodes at me area of pixels, and an illumination system comprising an optical waveguide having an exit face facing the image display panel and a plurality of end faces, at least one of which is an entrance face for light, while light can be coupled into said end face of the optical waveguide.

The image display panel may comprise an electro-optical medium (between two substrates) such as a liquid crystal material or an electrochromic material. It may also be based on electrostatic forces (deformable mirrors).

Such reflective display devices are used in, for example, portable apparatus such as laptop computers, mobile telephones, personal organizers, etc. With a view to saving energy, it is desirable mat the light source can be switched off in the case of sufficient ambient light.

The invention also relates to an illumination system for use in such a display device.

A display device of the type mentioned above is described in "Compact Front Lighting for Reflective Displays", SID 96 Applications Digest, pp. 43-46. This document shows an optical waveguide having a groove structure at the area of a first main face remote from the image display panel. The groove structure is necessary to deflect light rays into the direction of the image display panel. A problem in this case is that the groove structure makes it difficult to apply further layers, such as for instance an anti - reflection layer or other functional layers on the said first main face.

A solution to this problem is provided by Japanese Laid-Open Patent Publication No. 2000-347041, in which the optical waveguide comprises sequentially a light transmission plate body made of acryl, a first intermediate layer made of TiO, a second intermediate layer made of SiO and a protective layer made of siloxane or acrylic resin. The first intermediate layer has a refractive index higher than the refractive index of the light transmission plate body and the second intermediate layer. Since the refractive index of the first intermediate layer is greater than the refractive index of the light transmission plate body and the refractive index of the second intermediate layer, the incident light on the light transmission plate body from a light source is reflected at the boundary surface of the first intermediate layer and the second intermediate layer, emitted from the inner flank of the light transmission plate body and directed toward a liquid crystal display section. A problem in this case lies in the difficulty of manufacturing the optical waveguide, which requires providing a structured plate body, on which two intermediate layers must be provided. As it is desirable to coupled a relatively large amount of light into the display, these intermediate layers must have substantially constant thickness throughout. Providing such layers on a structured substrate requires time-consuming and expensive techniques, such as sputtering. After that, the whole construction must be filled out with material for the protective layer, which in a final step should be cured.

It is an object of the present invention to provide a solution to this problem. To this end in a display device according to the invention an optical waveguide comprises an optically transparent material between two optically transparent layers, the optically transparent material having a higher refractive index than the material of the optically transparent layers, the interface between the optically transparent material and a first of said optically transparent layers at the side away from the image display panel being structured, wherein the light is coupled into the optically transparent material and the optical transparent material is a liquid.

Preferably the interface has a sawtooth structure or a prism structure.

To prevent polarization effects both the optically transparent material and the material of the optically transparent layers preferably are substantially optically anisotropic.

These and other aspects of the invention will now be elucidated with reference to the drawings. In these drawings,
Fig. 1 is a cross-section of an embodiment of a reflective display device according to the invention while
Fig. 2 is a diagrammatic cross section of a part of the illumination system used in the device shown in Fig. 1 and
Fig.3 shows a further embodiment of a part of another embodiment of the illumination system.

The Figures are diagrammatic and not to scale. Corresponding components generally have the same reference numerals.

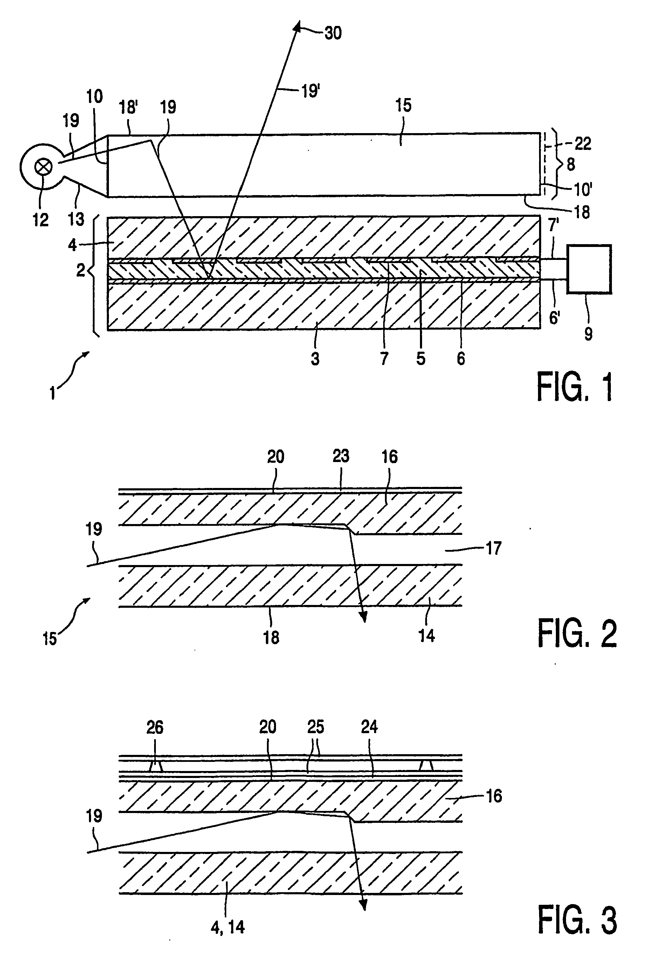

The display device 1 shown diagrammatically in Fig. 1 comprises an image display panel 2 and an illumination system 8.

The image display panel 2 comprises a liquid crystalline material 5 between two substrates 3, 4, based on the twisted nematic (TN), the supertwisted nematic (STN) or the ferroelectric effect. The image display panel comprises, for example, a matrix of pixels for which light-reflecting picture electrodes 6 are provided on the substrate 3. The substrate 4 is light transmissive and has one or more light-transmissive electrodes 7 of, for example, ITO (indium tin oxide). The picture electrodes are provided with electric voltages via connection wires 6', 7', which are provided with, drive voltages by means of a drive unit 9.

The illumination system 8 comprises an optical waveguide 15 which is made of an optically transparent material and has four end faces 10, 10'. A light source 12 whose light is coupled into the optical waveguide 15 via one of the end faces, for example 10, is situated opposite this end face. The light source 12 may be, for example, a rod-shaped fluorescence lamp. The light source may alternatively be constituted by one or more light-emitting diodes (LED) notably in flat panel display devices having small image display panels such as, for example, portable telephones. Moreover, the light source 12 may be detachable.

The exit face 18 of the optical waveguide 15 faces the image display panel 2. Each end face 10' of the transparent plate in which light is not coupled in may be provided, if necessary, with a reflector 22. In this way, light which is not coupled out on an exit face 18, 18' and consequently propagates through the optical waveguide and arrives at an end face is thus prevented from leaving the optical waveguide 15 via this end face 10'.

To prevent light from leaving the optical waveguide 15 without contributing to the light output of the illumination system, light of the lamp 12 is preferably coupled into the optical waveguide 15 via coupling means 13, for example, by means of a wedge-shaped optical waveguide which limits the angle of the entering beam 19 with respect to the exit faces 18, 18' to, for example, 15 degrees. Moreover, the contrast is enhanced because there is no stray light.

According to invention the optical waveguide 15, as shown in Fig. 2, has an optically transparent material 17 between two optically transparent layers (substrates) 14, 16. The optically transparent material 17 is a liquid, such as a liquid suspension of TiO₂ particles, having a refractive index of about 2 which is higher than the refractive index of the optically transparent layers 14, 16 which in the case of glass transparent layers (substrates) 14, 16 is about 1.5. The interface between the optically transparent material 17 and the optically transparent layer is structured and comprises for instance a plurality of grooves in the transparent layer 16. The entering light beam 19 reflected by the surfaces of these grooves in the direction of the image display panel 2.

After reflection in the image display panel 2, the beam 19' is propagated through the optical waveguide (refraction due to differences in refractive indices are considered to be negligible in this embodiment) and reaches the viewer 30 (Fig. 1).

Since the surface 20 is flat now, this may easily be covered with further layers such as an anti reflection coating 23.

In a further embodiment (not shown) the substrates 4,14 have been integrated into a single substrate (Figure 3). In this case a polariser may be present between the transparent material 17 and said substrate.

The substrate 16 with the microstructure may be an ITO substrate -foil or a microreplicated foil.

Several variations are possible within the scope of the invention. For example, the grooves may have special patterns to enhance effectiveness or prevent Moire patterns.

The picture electrodes 6 do not need to be light reflecting. In another embodiment, they are used as light-transmissive ITO electrodes and a mirror is arranged behind these electrodes.

Especially in flexible displays when a polymerized material having electro-optical characteristics (like for instance PDLC) is used for the optically transparent material, the layer 17 may be patterned and inserted between plastic substrates.

The flat surface enables the integration of further functions. One example is shown in Figure 3, in which a touch sensor (schematically drawn as layers 25, kept apart by spacers 26) is fixed to the surface 20 by means of glue 24.

The protective scope of the invention is not limited to the embodiments described. The invention resides in each and every novel characteristic feature and each and every combination of characteristic features. Reference numerals in the claims do not limit their protective scope. Use of the word "comprise" does not exclude the presence of elements other than those mentioned in the claims. Use of the word "a" or "an" preceding an element does not exclude the presence of a plurality of such elements.

## Claims

1. A display device comprising an image display panel (2) having a first substrate (4) which is provided with electrodes (7) at the area of pixels, and an illumination system (8) comprising an optical waveguide (15) having an exit face (18) facing the image display panel and a plurality of end faces (10, 10'), at least one of which is an entrance face (10) for light, while light can be coupled into said end face of the optical waveguide, said optical waveguide (15) comprising an optically transparent material (17) between two optically transparent layers (14, 16) the optically transparent material having a higher refractive index than the material of the optically transparent layers, the interface between the optically transparent material (17) and a first (16) of said optically transparent layers at the side away from the image display panel being structured, **characterized in that** the light is coupled into the optically transparent material (17), and the optically transparent material (17) is a liquid.

2. A display device as claimed in claim 1, **characterized in that** both the optically transparent material (17) and the material of the optically transparent layers (14, 16) are substantially optically anisotropic.

3. A display device as claimed in claim 1, **characterized in that** said first optically transparent layer (16) is structured at the interface.

4. A display device as claimed in claim 1 or 2, **characterized in that** the interface has a sawtooth structure or a prism structure.

5. A display device as claimed in claim 1 or 2, **characterized in that** the material of the optically transparent layers (14, 16) is glass, quartz or a synthetic material.

6. An illumination system (8) comprising an optical waveguide (15) of an optically transparent material (17), having an exit face (18) and a plurality of end faces (10, 10'), at least one of said end faces (10, 10') being an entrance face (10) for light situated opposite thereto, while light can be coupled into said end face (10, 10') of the optical waveguide (15), said optical waveguide (15) comprising an optically transparent material (17) between two optically transparent layers (14, 16) the optically transparent material (17) having a higher refractive index than the material of the optically transparent layers (14, 16) and the interface between the optically transparent material (17) and a first (16) of said optically transparent layers being structured, **characterized in that** the light is coupled into the optically transparent material (17), and the optically transparent material (17) is a liquid.

7. An illumination system as claimed in claim 6, **characterized in that** both the optically transparent material (17), the material of the optically transparent layers (14, 16) are substantially optically anisotropic.

8. An illumination system as claimed in claim 6, **characterized in that** one of the optically transparent layers (14, 16) is structured at the interface.

9. An illumination system as claimed in claim 6 or 7, **characterized in that** the interface has a sawtooth structure or a prism structure.

10. An illumination system as claimed in claim 6 or 7, **characterized in that** the material of the optically transparent layers (14, 16) is glass, quartz or a synthetic material.

## Patentansprüche

1. Anzeigevorrichtung, mit einer Bildanzeigetafel (2), die ein erstes Substrat (4) umfasst, das Elektroden (7) in dem Pixelbereich aufweist, und einem Beleuchtungssystem (8), das einen optischen Wellenleiter (15) mit einer Austrittseite (18) umfasst, die der Bildanzeigetafel zugewandt ist, sowie eine Vielzahl von Endseiten (10, 10'), von denen mindestens eine Einlassseite (10) für Licht ist, wobei das Licht in die Endseite des optischen Wellenleiters eingekoppelt werden kann, wobei der optische Wellenleiter (15) ein optisch transparentes Material (17) zwischen zwei optisch transparenten Schichten (14, 16) umfasst, das optische transparente Material einen höheren Brechungsindex als das Material der optisch transparenten Schichten hat, die Grenzfläche zwischen dem optisch transparenten Material (17) und einer ersten (16) der optisch transparenten Schichten an der Seite, die von der Bildanzeigetafel weg weist, strukturiert ist, **dadurch gekennzeichnet, dass** das Licht in das optisch transparente Material (17) eingekoppelt wird, und das optisch transparente Material (17) eine Flüssigkeit ist.

2. Anzeigevorrichtung nach Anspruch 1, **dadurch gekennzeichnet, dass** sowohl das optisch transparente Material (17) als auch das Material der optisch transparenten Schichten (14, 16) im Wesentlichen optisch antisotrop sind.

3. Anzeigevorrichtung nach Anspruch 1, **dadurch gekennzeichnet, dass** die erste optisch transparente Schicht (16) an der Grenzfläche strukturiert ist.

4. Anzeigevorrichtung nach Anspruch 1 oder 2, **dadurch gekennzeichnet, dass** die Grenzfläche eine Sägezahnstruktur oder eine Prismastruktur aufweist.

5. Anzeigevorrichtung nach Anspruch 1 oder 2, **dadurch gekennzeichnet, dass** das Material der optisch transparenten Schichten (14, 16) Glas, Quarz oder ein synthetisches Material ist.

6. Beleuchtungssystem (8) mit einem optischen Wellenleiter (15) eines optisch transparenten Materials (17) mit einer Austrittseite (18) und einer Mehrzahl von Endseiten (10, 10'), wobei zumindest eine der Endseiten (10, 10') eine Einlassseite (10) für diesem gegenüberliegendem Licht ist, wobei Licht in die Endseite (10, 10') des optischen Wellenleiters (15) eingekoppelt werden kann, der optische Wellenleiter (15) ein optisch transparentes Material (17) zwischen zwei optisch transparenten Schichten (14, 16) aufweist, das optisch transparente Material (17) einen höheren Brechungsindex als das Material der optisch transparenten Schichten (14, 16) aufweist, und die Grenzfläche zwischen dem optisch transparenten Material (17) und einer ersten (16) der optisch transparenten Schicht strukturiert ist, **dadurch gekennzeichnet, dass** das Licht in das optisch transparente Material (17) eingekoppelt wird, und das optisch transparente Material (17) eine Flüssigkeit ist.

7. Beleuchtungssystem nach Anspruch 6, **dadurch gekennzeichnet, dass** sowohl das optisch transparente Material (17) als auch das Material der optisch transparenten Schichten (14, 16) im wesentlich optisch anisotrop sind.

8. Beleuchtungssystem nach Anspruch 6, **dadurch gekennzeichnet, dass** eine der optisch transparenten Schichten (14, 15) an der Grenzfläche strukturiert ist.

9. Beleuchtungssystem nach Anspruch 6 oder 7, **dadurch gekennzeichnet, dass** die Grenzfläche eine Sägezahnstruktur oder eine Prismastruktur aufweist.

10. Beleuchtungssystem nach Anspruch 6 oder 7, **dadurch gekennzeichnet, dass** das Material der optisch transparenten Schichten (14, 16) Glas, Quarz oder ein synthetisches Material ist.

## Revendications

1. Dispositif d'affichage comprenant un panneau d'affichage d'image (2) comportant un premier substrat (4) qui est pourvu d'électrodes (7) au niveau de pixels, et un système d'éclairage (8) comprenant un guide d'onde optique (15) ayant une face de sortie (18) faisant face au panneau d'affichage d'image et une pluralité de faces d'extrémité (10, 10'), dont au moins une est une face d'entrée (10) pour la lumière, tandis que la lumière peut être couplée dans ladite face d'extrémité du guide d'onde optique, ledit guide d'onde optique (15) comprenant un matériau optiquement transparent (17) entre deux couches optiquement transparentes (14, 16), le matériau optiquement transparent ayant un indice de réfraction plus élevé que le matériau des couches optiquement transparentes, l'interface entre le matériau optiquement transparent (17) et une première (16) desdites couches optiquement transparentes du côté éloigné du panneau d'affichage d'image étant structurée, **caractérisé en ce que** la lumière est couplée dans le matériau optiquement transparent (17), et le matériau optiquement transparent (17) est un liquide.

2. Dispositif d'affichage selon la revendication 1, **caractérisé en ce que** le matériau optiquement transparent (17) et le matériau des couches optiquement transparentes (14, 16) sont tous deux substantiellement optiquement anisotropes.

3. Dispositif d'affichage selon la revendication 1, **caractérisé en ce que** ladite première couche optiquement transparente (16) est structurée à l'interface.

4. Dispositif d'affichage selon la revendication 1 ou 2, **caractérisé en ce que** l'interface a une structure en dents de scie ou une structure de prisme.

5. Dispositif d'affichage selon la revendication 1 ou 2, **caractérisé en ce que** le matériau des couches optiquement transparentes (14, 16) est du verre, du quartz ou un matériau synthétique.

6. Système d'éclairage (8) comprenant un guide d'onde optique (15) en matériau optiquement transparent (17), ayant une face de sortie (18) et une pluralité de faces d'extrémité (10, 10'), au moins l'une desdites faces d'extrémité (10, 10') étant une face d'entrée (10) pour la lumière située en face de celle-ci, tandis que la lumière peut être couplée dans ladite face d'extrémité (10, 10') du guide d'onde optique (15), ledit guide d'onde optique (15) comprenant un matériau optiquement transparent (17) entre deux couches optiquement transparentes (14, 16), le matériau optiquement transparent ayant un indice de réfraction plus élevé que le matériau des couches optiquement transparentes (14, 16), l'interface entre le matériau optiquement transparent (17) et une première (16) desdites couches optiquement transparentes étant structurée, **caractérisé en ce que** la lumière est couplée dans le matériau optiquement transparent (17), et le matériau optiquement transparent (17) est un liquide.

7. Système d'éclairage selon la revendication 6, **caractérisé en ce que** le matériau optiquement transparent (17) et le matériau des couches optiquement transparentes (14, 16) sont tous deux substantiellement optiquement anisotropes.

8. Système d'éclairage selon la revendication 6, **caractérisé en ce que** l'une des couches optiquement transparentes (14, 16) est structurée à l'interface.

9. Système d'éclairage selon la revendication 6 ou 7, **caractérisé en ce que** l'interface a une structure en dents de scie ou une structure de prisme.

10. Système d'éclairage selon la revendication 6 ou 7, **caractérisé en ce que** le matériau des couches optiquement transparentes (14, 16) est du verre, du quartz ou un matériau synthétique.
